# FASCICULE DE BREVET EUROPEEN

(11) **EP 0 780 546 B1**
(45) Date de publication et mention de la délivrance du brevet: **03.11.1999**
(21) Numéro de dépôt: 96402809.6
(22) Date de dépôt: 19.12.1996
(51) Int. Cl.: F01D 25/18, F16N 39/00, B01D 45/14

(54) **Rotor déshuileur pour enceinte de lubrification**
Zentrifugalölabscheider für ein Schmierungsgehäuse
Centrifugal separator for lubrication chamber

(30) Priorité: 20.12.1995 FR 9515121
(43) Date de publication de la demande: 25.06.1997
(73) Titulaire: SOCIETE NATIONALE D'ETUDE ET DE CONSTRUCTION DE MOTEURS D'AVIATION Snecma, F-75015 Paris (FR)
(72) Inventeur: Blanes, Gérard Antoine Gilbert, 94110 Arcueil (FR); Cannavo, René Joseph Antoine, 77950 Maincy (FR); Forgue, Jean Berard, 77720 Saint Mery (FR); Garnier, Francis Georges Albert, 77720 Bombon (FR); Hugues, Michel Georges, 77590 Bois le Roi (FR); Massot, Gilles Claude Gabriel, 77950 Voisenon (FR); Morel, Patrick Charles Georges, 77590 Chartrettes (FR); Touron, Carole Claudine, 91710 Vert le Petit (FR)

(56) Documents cités:
- EP-A- 0 286 160
- WO-A-94/23823
- FR-A- 620 108
- FR-A- 1 502 216
- FR-A- 2 696 655
- US-A- 4 329 968

## Description

L'invention a trait à un rotor déshuileur pour une enceinte de lubrification.

Certains paliers de turbomachine, montés entre un rotor et un stator, sont lubrifiés par une circulation d'huile projetée dans une enceinte contenant le palier et dont l'accès est restreint par des joints à labyrinthe disposés à la jonction des parties fixe et tournante de l'enceinte. Les joints à labyrinthe ont pour fonction de contrarier l'écoulement de l'huile hors de l'enceinte en lui faisant accomplir un trajet sinueux, et ils sont en pratique complétés par un écoulement d'air qui les traverse vers l'enceinte.

Cet air doit ensuite être évacué, mais comme il a eu l'occasion de se charger d'un brouillard d'huile en traversant l'enceinte, il pourrait alors polluer le milieu dans lequel il serait rejeté ou même provoquer des incendies en arrivant sur des parties chaudes de la machine. De plus, l'huile ne tarderait pas à s'épuiser dans l'enceinte et la lubrification serait compromise. C'est pourquoi un déshuileur doit être disposé à la sortie de l'enceinte : son rôle est d'assécher l'air évacué en le séparant de l'huile qu'il transporte en suspension et de renvoyer l'huile recueillie à l'intérieur de l'enceinte.

Un déshuileur est généralement un rotor composé d'une couronne tournante qui entoure des orifices de sortie de l'enceinte menant à une zone à basse pression : l'air chargé d'huile est amené à traverser la couronne et à quitter celle-ci, puis l'enceinte, par un écoulement centripète tout en cédant son huile, qui se dépose sur la garniture de la couronne avant d'être éjectée par les forces centrifuges produites par la rotation de la couronne.

Dans le brevet français n°2 696 655, le rotor est une carcasse remplie de billes ; dans le brevet britannique n°1 508 212, c'est une bourre poreuse qui est utilisée comme garniture de dépôt de l'huile.

L'invention a pour but essentiel d'utiliser une structure de rotor à grand taux de vide et qui est en même temps peu coûteuse et légère, puisqu'on emploie une structure de nid d'abeilles, déjà couramment utilisée dans ce domaine technique pour d'autres applications, notamment comme élément de matériaux composites ou comme garniture abradable (facilement érodée) de joints d'étanchéité.

L'invention va maintenant être décrite plus en détail à l'aide des figures suivantes, annexées à titre illustratif et non limitatif :
- la figure 1 est une vue générale d'un palier dans lequel l'invention trouve emploi,
- la figure 2 est une vue isolée d'un rotor déshuileur selon l'invention,
- et la figure 3 est une autre vue de ce rotor.

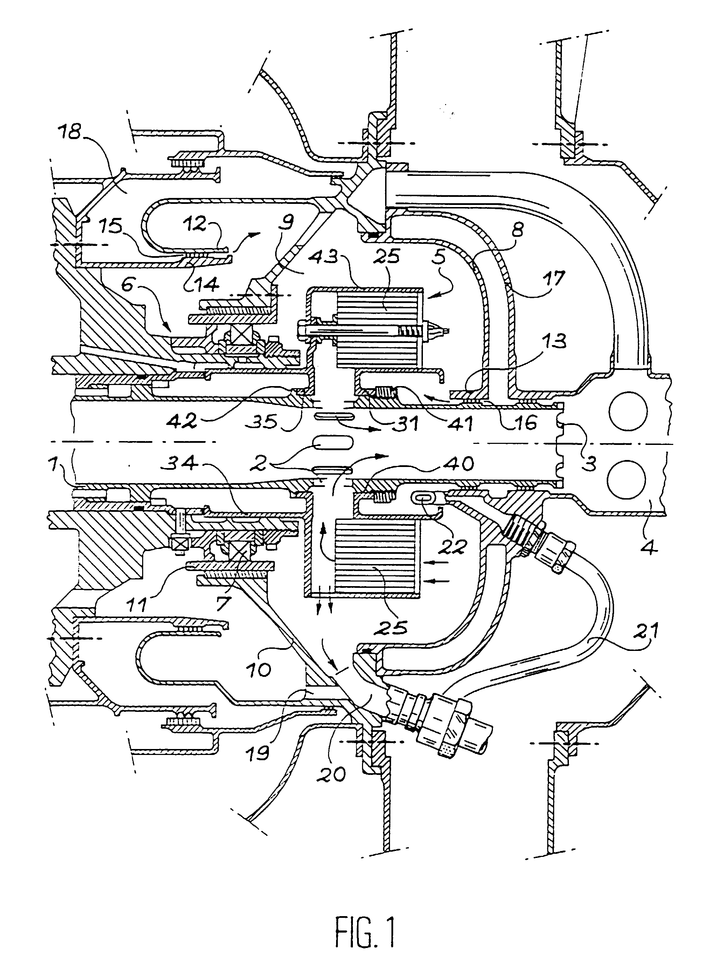

Il existe actuellement deux déshuileurs sur ce type de turboréacteurs : ils sont situés aux extrémités de l'arbre de transmission, l'un à l'avant, près du roulement de la soufflante, l'autre à l'arrière, près du roulement de turbine. C'est cette dernière partie qui est représentée à la figure 1 : l'arbre de transmission porte la référence 1 ; on remarque qu'il est creux et porte un cercle d'orifices 2 à travers sa paroi, et qu'il est ouvert à son extrémité arrière 3, qui communique à une chambre 4 de mise à la pression atmosphérique ; enfin, l'arbre 1 porte et entraîne en rotation le rotor déshuileur 5 de l'invention et, à l'avant de celui-ci, un équipement de support 6 de la bague interne d'un roulement 7 à lubrifier.

A ces pièces tournantes s'oppose un carénage 8 solidaire du stator de la turbomachine et qui entoure le rotor déshuileur 5 et le roulement 7 pour les enclore dans une enceinte 9 qu'il forme avec l'arbre 1 et l'équipement de support 6. Le carénage 8 porte une nervure 10 conique terminée par un équipement de support 11 de la bague externe du roulement 7 ; cette nervure 10 est ajourée pour ne pas diviser l'enceinte 9 ; le carénage 8 porte aussi, à ses extrémités, deux rebords 12 et 13 cylindriques qui viennent respectivement devant un rebord cylindrique 14 de l'équipement de support 6 tournant et une portion de l'arbre 1. Les jeux formés à ces jonctions sont partiellement colmatés par des joints à labyrinthe 15 et 16. De plus, le carénage 8 est entouré par un carénage extérieur 17, et de l'air à pression élevée, originaire d'autres parties de la machine, est insufflé dans l'intervalle 18 entre les carénages 8 et 17 avant d'entrer dans l'enceinte 9 par les joints à labyrinthe 15 et 16.

L'huile coulant sur les parois de la partie avant de l'enceinte 9 passe par un perçage 19 établi au travers de la portion la plus basse de la nervure 10 et débouche devant un réceptacle d'huile 20. L'huile provenant de la partie avant de l'enceinte 9 et l'huile provenant de la partie arrière et principalement du déshuileur viennent s'accumuler dans le réceptacle d'huile 20 où elles sont recupérées par la pompe de récupération.

L'alimentation en huile de l'enceinte 9 s'effectue au moyen d'une buse d'injection d'huile 22 située dans l'enceinte 9, contre l'arbre 1 et près de l'arrière, non loin du rotor déshuileur 5. Le mouvement tournant de l'arbre 1 et des pièces attenantes rend l'air de l'enceinte 9 turbulent et favorise l'émulsion de l'huile. Un débit de fuite d'air s'écoule vers la chambre à pression atmosphérique 4 en traversant le rotor déshuileur 5, puis les orifices 2 de l'arbre 1. Mais l'air et l'huile en émulsion se séparent et suivent des voies opposées à la sortie du rotor déshuileur 5, centripète pour le premier et centrifuge pour la seconde. L'huile retombe dans l'enceinte 9 et le réservoir 20 pour des raisons qu'on va maintenant voir.

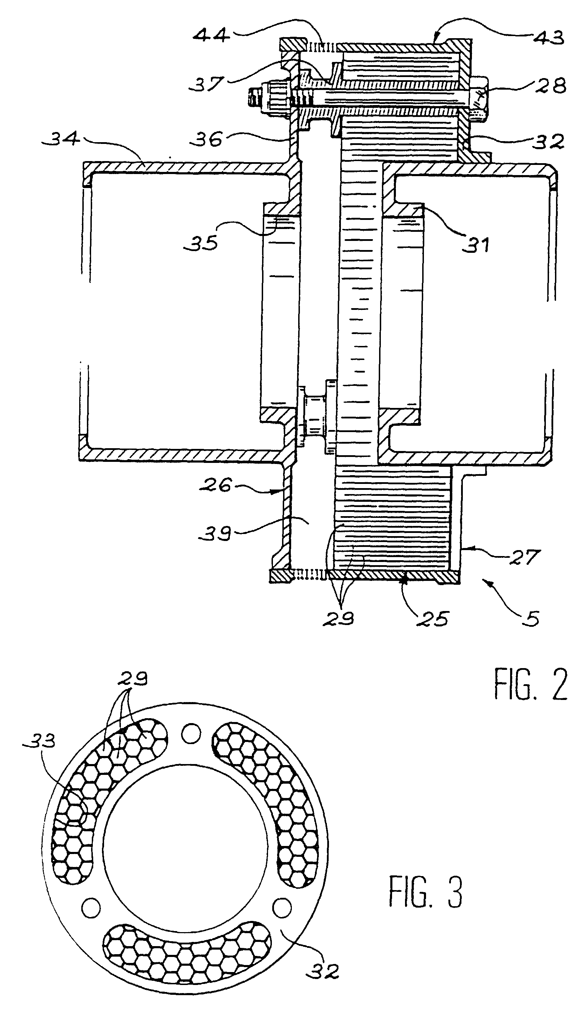

Le rotor déshuileur 5 est représenté isolé en figure 2. Son composant principal est une cartouche 25 maintenue en un moyeu avant 26 et un couvercle 27 par des boulons axiaux 28. La cartouche 25 a la forme d'une couronne qui est composée d'une structure en nids d'abeilles, c'est-à-dire composée de lamelles qui délimitent des alvéoles rectilignes, hexagonaux ou polygonaux de façon générale. L'épaisseur de cette cartouche 25 est suffisante pour que les alvéoles disposés axialement forment des canaux 29 très longs par rapport aux dimensions de leur section transversale.

Le moyeu avant 26 est composé d'un élément cylindrique comportant des canaux rayonnants 2 par lesquels l'air purifié de l'huile accède au centre du tube de dégazage. Il comprend aussi un flasque avant 36 plat, circulaire et plein qui comporte des alésages 31, 35 centrés sur la partie cylindrique 40 de l'arbre 1 (voir figure 1).

L'ensemble est serré entre un épaulement 42 et un écrou 41.

Le couvercle 27 comporte un flasque 32 qui est ici représenté circulaire et doté de larges lumières 33 au travers desquelles l'air chargé d'huile parvient aux canaux 29. Le couvercle 27 possède aussi une partie cylindrique 43 percée d'orifices 44 par lesquels l'huile s'échappe. Ce couvercle coiffe le moyeu avant 26.

La rotation du rotor déshuileur 5 a pour conséquence un trajet oblique des gouttelettes d'huile dans les canaux 29 à cause de leur inertie, et le dépôt de ces gouttelettes sur leurs parois. La séparation est alors accomplie. D'autre part, le carter avant 26 est lui aussi composé d'une plaque de support 34 cylindrique comprenant un rebord interne 35 posé sur l'arbre 1, et d'une jupe 36 plane et circulaire qui l'entoure, mais cette jupe 36 est pleine. De plus, des entretoises 37 enfilées autour des boulons 28 l'isolent de la cartouche 25. Il en résulte qu'un canal circulaire 39 est formé entre la jupe 37 et la cartouche 25 ; l'air désormais asséché achève le parcours en sens centripète après avoir quitté la cartouche 25, alors que l'huile déposée sur les parois du cartouche 25 est entraînée par l'air parcourant les canaux 29 et dispersée par les forces centrifuges à la sortie de la cartouche 25. L'avantage du nid d'abeilles est que les canaux 29 peuvent être très fins, ce qui favorise le captage de l'huile en suspension et que leur longueur peut être assez grande, ce qui a le même effet, mais sans que les pertes de charge soient importantes. De plus, la cartouche 25 est légère, peu coûteuse et facilement construite et remplacée si nécessaire.

Les rebords 31 et 35 des carters 26 et 27 peuvent être glissés sur une portée 40 cylindrique de l'arbre 1, visible à la figure 1, et serrés entre un écrou 41 et un collet 42 de cette portée 40. Le rotor déshuileur 5 est donc facile à poser. La plaque de support 34 peut être soutenue contre l'équipement de support 6, ce qui renforce la stabilité du montage, et la buse d'injection 21 peut déboucher entre l'arbre 1 et l'autre plaque 30 afin de ne pas favoriser un écoulement prématuré de l'huile réinjectée dans l'enceinte 9 à travers le rotor déshuileur 5, ce qui pourrait être le cas si elle débouchait juste devant lui.

Enfin, une virole 43 entoure la cartouche 25 et la protège ; elle est jetée entre les jupes 32 et 36 et soutenue par l'une quelconque d'entre elles, soit par l'intermédiaire des boulons 28 (comme on l'a représenté à la figure 1), soit par une liaison directe (comme on l'a représenté à la figure 2). La virole 43 est évidemment pourvue de lumières 44 devant le canal circulaire 39.

L'invention pourrait être installée sur d'autres parties de la machine, en particulier dans l'enceinte du roulement de soufflante, qui comprend elle aussi un rotor déshuileur, comme on l'a signalé plus haut.

## Revendications

1. Rotor de séparation d'huile en suspension dans de l'air s'écoulant à travers le rotor (5) suivant un écoulement centripète, le rotor étant en forme de couronne, comprenant une garniture de séparation (25) sous forme d'une structure en nid d'abeilles qui comprend des passages axiaux (29) d'écoulement de l'air et deux plaques planes (32, 36) entre lesquelles s'étend la garniture (25), une des plaques (32), située d'un côté d'entrée de l'air dans la garniture, étant ajourée (33) devant la garniture, et l'autre des plaques (36) étant pleine et séparée de la garniture, caractérisé en ce que les plaques sont assemblées par des boulons (28) traversant la garniture, et en ce que des entretoises (37) sont disposées autour des boulons (28) entre la garniture (25) et la plaque pleine (36).

2. Rotor de séparation suivant la revendication 1, caractérisé en ce qu'il comprend des bords latéraux cylindriques (31, 35) reposant sur un arbre tournant (1).

3. Rotor de séparation suivant l'une quelconque des revendications 1 ou 2, caractérisé en ce qu'il comprend une virole (43) de protection de la garniture (25), entourant la garniture, soutenue par une des plaques et évidée autour des entretoises (37).

## Patentansprüche

1. Zentrifugalölabscheider für Öl, das sich in der Luft befindet, die in einem Zentripetalfluß durch den Zentrifugalölabscheider (5) (Rotor) strömt, wobei der Zentrifugalabscheider in der Form eines Kranzes ausgeführt ist, der einen Abscheidereinsatz (25) mit wabenförmigem Aufbau, der axiale Strömungsdurchlässe (29) für die Luft aufweist, und zwei ebene Platten (32, 36), zwischen denen sich der Einsatz (25) erstreckt, aufweist, wobei eine der Platten (32), die sich an der Lufteintrittseite des Einsatzes befindet, vor dem Einsatz durchbrochen (33) ist, und die andere Platte (36) massiv und von dem Einsatz abgetrennt ist,
**dadurch gekennzeichnet, daß** die Platten durch Schrauben (28) miteinander verbunden sind, die durch den Einsatz hindurch verlaufen, und daß Streben (37) zwischen dem Einsatz (25) und der Vollplatte (36) um die Schrauben (28) herum angeordnet sind.

2. Zentrifugalabscheider nach Anspruch 1, **dadurch gekennzeichnet, daß** er zylindrische Seitenkanten (31, 35) aufweist, die auf einer drehenden Welle (1) sitzen.

3. Zentrifugalabscheider nach einem der Ansprüche 1 oder 2, **dadurch gekennzeichnet, daß** er einen Schutzring (43) für den Einsatz (25) aufweist, der den Einsatz umgibt und dabei von einer der Platten gehalten wird und um die Streben (37) herum ausgespart ist.

## Claims

1. Rotor for separating out oil in suspension in the air flowing through the rotor (5) centripetally, the rotor being in the shape of an annulus and comprising a separating packing (25) in the form of a honeycomb structure which comprises axial passages (29) for the flow of the air and two flat plates (32, 36) between which the packing (25) extends, one of the plates (32), located on the side via which air enters the packing, being perforated (33) opposite the packing, and the other of the plates (36) being solid and separated from the packing, characterized in that the plates are held together by bolts (28) passing through the packing, and in that spacer pieces (37) are placed around the bolts (28) between the packing (25) and the solid plate (36).

2. Separating rotor according to Claim 1, characterized in that it comprises cylindrical lateral edges (31, 35) resting on a rotating shaft (1).

3. Separating rotor according to either one of Claims 1 and 2, characterized in that it comprises an outer casing (43) for protecting the packing (25), surrounding the packing, supported by one of the plates and having apertures around the spacer pieces (37).
